# EUROPÄISCHE PATENTSCHRIFT

(11) **EP 1 275 014 B1**
(45) Veröffentlichungstag und Bekanntmachung des Hinweises auf die Patenterteilung: **30.10.2013**
(21) Anmeldenummer: 01933782.3
(22) Anmeldetag: 30.03.2001
(51) Int. Cl.: B64D 15/22, G01S 13/36, G01S 13/88, G08B 19/02

(54) **VORRICHTUNG ZUR MESSUNG VON SCHICHTDICKEN**
DEVICE FOR MEASURING LAYER THICKNESSES
DISPOSITIF DE MESURE D'EPAISSEURS DE COUCHES

(30) Priorität: 31.03.2000 DE 10016315
(43) Veröffentlichungstag der Anmeldung: 15.01.2003
(73) Patentinhaber: G. Lufft Mess- und Regeltechnik GmbH, 70736 Fellbach-Schmiden (DE)
(72) Erfinder: SCHMITZ-HÜBSCH, Axel, 71686 Remseck-Aldingen (DE); GROSS, Jürgen, 70736 Fellbach (DE)
(74) Vertreter: Grünecker, Kinkeldey, Stockmair & Schwanhäusser
(86) Internationale Anmeldenummer: PCT/EP2001/003676
(87) Internationale Veröffentlichungsnummer: WO 2001/073472

(56) Entgegenhaltungen:
- WO-A1-86/01176
- DE-C- 2 636 474
- GB-A- 1 251 362
- SU-A- 1 725 073
- US-A- 3 836 846
- US-A- 4 470 123
- US-A- 5 381 694
- US-A- 5 629 706
- MONGIA R K ET AL: "DIELECTRIC RESONATOR ANTENNAS - A REVIEW AND GENERAL DESIGN RELATIONS FOR RESONANT FREQUENCY AND BANDWIDTH", INTERNATIONAL JOURNAL OF MICROWAVE AND MILLIMETER-WAVECOMPUTER-AIDED ENGINEERING, WILEY, NEW YORK, NY, US, vol. 4, no. 3, 1 January 1994 (1994-01-01) , pages 230-247, XP000886739, ISSN: 1050-1827
- TRUEMAN C W ET AL: "Resonant frequencies and Q factors of dielectric parallelepipeds by measurement and by FDTD", PRECISION ELECTROMAGNETIC MEASUREMENTS, 1994. DIGEST., 1994 CONFERENCE ON BOULDER, CO, USA 27 JUNE-1 JULY 1994, NEW YORK, NY, USA,IEEE, 27 June 1994 (1994-06-27), pages 61-62, XP010123683, DOI: DOI:10.1109/CPEM.1994.333174 ISBN: 978-0-7803-1984-4
- HULIN LIU ET AL: "A NEW QUADRATURE SAMPLING AND PROCESSING APPROACH", IEEE TRANSACTIONS ON AEROSPACE AND ELECTRONIC SYSTEMS, IEEE SERVICE CENTER, PISCATAWAY, NJ, US, vol. 25, no. 5, 1 September 1989 (1989-09-01), pages 733-747, XP000071479, ISSN: 0018-9251, DOI: DOI:10.1109/7.42090

## Beschreibung

### Gebiet der Erfindung

Die Erfindung betrifft eine Vorrichtung zur Messung der Dicke eines Belags auf einer Oberfläche, nämlich eines Belags aus Wasser oder Eis.

### Stand der Technik

Im Stand der Technik sind eine Vielzahl von Vorrichtungen zur Messung der Dicke von Schichten bekannt. Allerdings findet sich im Stand der Technik keine Vorrichtung, die in die Oberfläche integrierbar ist und mit der sich eine veränderliche Dicke eines auf der Oberfläche befindlichen Belags ermitteln lässt.

Aus der US 5,381,694 ist ein Reflektometer zur Bestimmung von Eisdicken bekannt. Elektro-magnetische Energie, die von der oberen und unteren Oberfläche von Eis reflektiert wird, wird verwendet um eine Phasendifferenz zu bestimmen, die die Dicke des Eises anzeigt.

Aus der US 3,836,846 ist eine Vorrichtung und Verfahren zum Bestimmen der Gegenwart von Eis oder Wasser auf einer Straße oder einer anderen Oberfläche mittels reflektierter Mikrowellen bekannt.

Aus der WO 86/01176 ist ein Eismessungsinstrument bekannt, das einen Wellenleiter umfasst. Die Resonanzfrequenz des Wellenleiters hängt von der Gegenwart und/oder Dicke von Eis an dem Messort ab.

Mongia et al. (MONGIA R K ET AL: "DIELECTRIC RESONATOR ANTENNAS - A REVIEW AND GENERAL DESIGN RELATIONS FOR RESONANT FREQUENCY AND BANDWIDTH", INTERNATIONAL JOURNAL OF MICROWAVE AND MILLIMETER-WAVECOMPUTER-AIDED ENGINEERING, WILEY, NEW YORK, vol. 4, no. 3, pages 230-247) gibt einen Überblick über offene dielektrische Resonatoren.

### Beschreibung der Erfindung

Der Erfindung liegt demnach die Aufgabe zugrunde eine Vorrichtung zu schaffen, die eine Messung einer sich verändernden Dicke eines Belags ermöglicht.

Diese Aufgabe wird gelöst durch eine Vorrichtung zur Messung der Dicke eines Belags auf einer Oberfläche gemäß Anspruch 1.

Dadurch dass die Radarstrahlen so emittiert werden, dass sie durch den Belag laufen und an der von der der Oberfläche abgewandten Grenzfläche des Belags reflektiert werden, lässt sich die erfindungsgemäße Vorrichtung so in der Oberfläche integrieren, dass die Dicke eines sich auf der Oberfläche befindlichen Belags aus Wasser oder Eis auf einfache Weise ermittelt werden kann.

Entsprechend einer bevorzugten Weiterbildung der Erfindung kann die Einrichtung zum Ermitteln der Dicke die von der Einrichtung zum Senden gesendeten Radarsignale und die von der Einrichtung zum Empfangen empfangenen Radarsignale mischen. Mit einer zuvor ermittelten Beziehung zwischen Phasendifferenz und Dicke des Belags lässt sich schließlich eine gemessene Phasendifferenz einer bestimmten Dicke des Belags zuordnen und sich somit die Dicke des Belags ermitteln.

Hierdurch kann auf einfache und kostengünstige Weise eine Einrichtung zum Ermitteln der Dicke implementiert werden. Insbesondere kann hierzu auf einfache und bekannte Verfahren im Gebiet der Elektronik zurückgegriffen werden.

Vorteilhafterweise können die gesendeten Radarsignale vor dem Mischen mit einer Phasenverschiebung von π/2 versehen werden. Durch diese Maßnahme werden die gesendeten und die empfangenen Signale weiter gegeneinander verschoben, so dass die Messgenauigkeit erhöht werden kann.

Die zuvor beschriebenen Ausführungen können dahingehend vorteilhaft weitergebildet werden, dass die gesendeten und/oder empfangenen Radarsignale zur Ermittlung der Dicke des Belags quadriert werden. Hierdurch wird eine Verdopplung des Bereichs erzielt, in dem eine Phasendifferenz zwischen gesendetem und empfangenen Signal auf eindeutige Weise einer Belagsdicke zugeordnet werden kann.

Die Einrichtung zum Senden von Radarsignalen und die Einrichtung zum Empfangen der reflektierten Radarsignale sind für einen Frequenzbereich von 1 bis 100 GHz ausgelegt. Hierdurch ist es auf einfache Weise möglich einen Messbereich in einer Größenordnung von einigen Millimetern zu realisieren. Darüber hinaus stehen in diesem Frequenzbereich Sende- und Empfangseinrichtungen zur Verfügung. Vorteilhafterweise arbeitet die Einrichtung zum Senden der Radarsignale und die Einrichtung zum Empfangen der reflektierten Radarsignale in dem ISM-Band. Dieses Band ist weltweit freigegeben, so dass die erfindungsgemäße Vorrichtung ohne Probleme einsetzbar ist. Gemäß einer besonders bevorzugten Ausführung wird eine Frequenz von 2,45 GHz verwendet. Aufgrund dieser relativ niedrigen Frequenz können die Kosten für die Herstellung der Vorrichtung vergleichsweise (im Gegensatz zu höheren Frequenzen) relativ gering gehalten werden, so dass ein universeller Einsatz der Vorrichtung auch bei kostenkritischen Anwendungen ermöglicht wird.

Die Vorrichtung kann so ausgelegt werden, dass sie eine Ortsauflösung im Sub-mm-Bereich, vorzugsweise mindestens 0,1 mm, aufweist. In diesem Bereich lassen sich durch die Vorrichtung optimale Ergebnisse erzielen.

Entsprechend einer anderen Weiterbildung der zuvor beschriebenen Vorrichtungen können die Einrichtung zum Senden und die Einrichtung zum Empfangen für Dauerstrichbetrieb ausgelegt sein. Durch diese Maßnahme lässt sich insbesondere die Einrichtung zum Senden auf einfache Weise und daher kostengünstige Weise ausbilden.

Gemäß einer weiteren vorteilhaften Ausbildung aller zuvor beschriebenen Vorrichtungen können die Einrichtung zum Senden der Radarsignale und die Einrichtung zum Empfangen der reflektierten Radarsignale eine gemeinsame Antenneneinrichtung aufweisen. Hierdurch kann eine kleine Bauhöhe der Vorrichtung sichergestellt werden, so dass sich der mögliche Einsatzbereich der Vorrichtung dadurch vergrößert. Außerdem vereinfacht sich dadurch, dass ein Bauelement von zwei Einrichtungen gemeinsam benutzt wird, der Aufbau der Vorrichtung, so dass die Vorrichtung auch zu geringeren Kosten hergestellt werden kann.

Entsprechend der Erfindung ist die Vorrichtung so ausgebildet sein, dass sie bündig mit der Oberfläche, auf der die Dicke eines Belags gemessen werden soll, vorsehbar ist. Im Zusammenhang mit der im letzten Absatz beschriebenen Ausführung kann vorteilhafterweise die Antenneneinrichtung entsprechend der Oberfläche, auf der die Dicke des Belags gemessen werden soll, ausgebildet sein. Durch diese Maßnahme kann die Vorrichtung vollständig integriert werden, was einerseits zu einem erhöhten Schutz der Vorrichtung gegen Beschädigung führt und andererseits eine Messung ohne Beeinflussung der Oberflächenform führt, wie dies in einer Vielzahl von Anwendungen erforderlich ist.

Die oben beschriebene Aufgabe wird ausserdem gelöst durch eine Vorrichtung zur Messung der Dicke eines Belags auf einer Oberfläche gemäß Anspruch 8.

In dieser Vorrichtung tritt an der offenen Seite des dielektrischen Resonators ein Streufeld aus, das durch die elektrischen Eigenschaften des Mediums des Belags, also beispielsweise durch die Dicke und das Belagsmaterial, beeinflusst wird. Anders ausgedrückt wird durch den dielektrischen Resonator und das angrenzende Medium ein Resonanzkreis ausgebildet, dessen Frequenz von der Permittivität des angrenzenden Mediums abhängt. Weiterhin wird die Güte des Resonanzkreises in Abhängigkeit von der Beschaffenheit des Mediums verändert, was zu einer Änderung der Amplitude führt. Auf diese Weise können durch Messung der Frequenz und der Amplitude die Dicke des Belags ermittelt werden. Ausserdem erlaubt die Messung der beiden Größen eine erhöhte Differenzierbarkeit zwischen verschiedenen Medien.

Wie auch mit der ersten oben beschriebene Lösung und im Gegensatz zu den aus dem Stand der Technik bekannten Vorrichtungen kann mit diesen erfindungsgemäßen Vorrichtungen die Dicke des Belags von der Oberflächenseite her bestimmt werden. Hieraus ergibt sich insbesondere der Vorteil, dass Störeinflüsse minimiert werden, die beispielsweise von Reflektionen von Gegenständen, die sich in der Nähe des Belags befinden, herrühren.

Insbesondere bei der zweiten Lösung ist das erzeugte Streufeld räumlich sehr begrenzt, so dass Störeinflüsse, beispielsweise beim Einsatz der Vorrichtung zur Messung der Dicke von Wasser oder Eis auf einem Strassenbelag Störeinflüsse von einem Fahrzeugboden, vernachlässigbar sind.

Vorteilhafterweise kann hierbei der Resonator eine Keramikscheibe mit hoher Permeabilität aufweisen. Dadurch ist es möglich, den Resonator auf einfache und kostengünstige Weise auszubilden.

Entsprechend der Erfindung ist die Keramikscheibe mit Ausnahme der dem Belag zugewandten Seite metallisiert. Dies führt dazu, dass das an der dem Belag zugewandten Seite austretende Streufeld verstärkt wird, was somit zu einer höheren Sensitivität der Vorrichtung führt.

Weiterhin weist die dem Belag abgewandte Seite Aussparungen in der Metallisierung auf. Dies hat den Vorteil, dass das von der Auswerteeinrichtung erzeugte Feld leichter in den dielektrischen Resonator eingekoppelt werden kann, was ebenfalls zu einer erhöhten Sensitivität der Vorrichtung führt.

Vorteilhafterweise kann der Resonator für das ISM-Band, vorzugsweise für eine Frequenz von 5,8 GHz, ausgelegt ist.

Gemäß eine weiteren vorteilhaften Ausbildung kann die Detektionseinrichtung einen Diodendetektor aufweisen. Mit einem derartigen Diodendetektor lässt sich die Amplitude des Resonators auf einfache Weise ermitteln. Darüber hinaus stellt ein Diodendetektor eine einfache Möglichkeit dar, die Amplitude des Resonators zu ermitteln, was seinerseits zu geringen Kosten der Vorrichtung führt.

Zweckmässigerweise kann die Auswerteeinrichtung einen digitalen Synthesizer, der so vorgesehen ist, dass er eine variable Frequenz in den Resonator einkoppelt, umfassen. Hierdurch ist ebenfalls eine vergleichsweise einfache Realisierung der Vorrichtung möglich.

Entsprechend einer bevorzugten Weiterbildung der zuvor beschriebenen Vorrichtungen werden die Auswerteeinrichtung und die Detektionseinrichtung durch einen µ-Prozessor gesteuert.

Die oben beschriebenen Vorrichtungen weisen eine Einrichtung zur Erfassung der Temperatur des Belags, beispielsweise in Form eines an der Oberfläche angeordneten Temperatursensors, auf. Hierdurch ist eine Messung der Temperatur des Belags möglich, die eine Diskriminierung des Aggregatszustands des Belags ermöglicht. Beispielsweise kann so auf einfache Weise unterschieden werden, ob es sich bei dem Belag um Wasser oder Eis handelt.

Zusätzlich hierzu kann auch eine Einrichtung zur Erfassung des Salzgehalts des Belags vorgesehen sein. In der alternativen Ausbildung ist neben der Ermittlung der Dicke des Belags auch eine Diskriminierung des Stoffs, aus dem der Belag gebildet ist, möglich. In der Ausbildung mit einem Temperatursensor kann durch die Messung des Salzgehalts der Aggregatszustand mit größerer Sicherheit bestimmt werden, insbesondere wenn sich der Belag in dem Temperaturbereich befindet, in welchem im Belag durch erhöhten Salzgehalt eine Gefrierpunktserniedrigung auftreten kann und somit die Temperatur kein eindeutiges Kriterium für den Aggregatszustand darstellt.

Vorteilhafterweise kann die Einrichtung zur Erfassung des Salzgehalts in Form von zwei an der Oberfläche angeordneten und mit dem Belag in Kontakt tretenden Elektroden und einer Einrichtung zum Messen des Widerstands zwischen den beiden Elektroden vorgesehen sein. Hierdurch ist eine einfache Ausbildung dieser Vorrichtung möglich; darüber hinaus kann diese Struktur auch einfach in der Oberfläche integriert werden, so dass die bereits zuvor beschriebenen Vorteile erzielt werden können.

Gemäß einer vorteilhaften Weiterbildung der zuvor beschriebenen Vorrichtungen können diese so ausgelegt sein, dass die ermittelte Dicke des Belags und/oder die erfasste Temperatur und/oder der erfasste Salzgehalt an eine Verkehrbeeinflussungsvorrichtung übermittelbar sind.

Vorteilhafterweise kann die Vorrichtung mit einer zusätzlichen Einrichtung zur Erfassung der Temperatur und/oder einer zusätzlichen Einrichtung zur Erfassung des Salzgehalts in einer Steuereinrichtung für eine Abtauvorrichtung eingesetzt werden. Neben einer der zuvor beschriebenen Vorrichtungen weist diese Steuereinrichtung eine Einrichtung auf, die ein Signal an die Abtaueinrichtung zur Inbetriebnahme derselben abgibt, wenn durch die Einrichtung zur Erfassung der Temperatur und/oder durch die Einrichtung zur Erfassung des Salzgehalts ermittelt worden ist, dass es sich bei dem Belag um Eis handelt.

Die zuvor beschriebenen Vorrichtungen können in einer Vielzahl von Anwendungen eingesetzt werden. Besonders vorteilhaft ist hierbei die Verwendung der zuvor beschriebenen Vorrichtung zur Bestimmung der Niederschlagshöhe von Wasser, Eis und/oder Schnee auf einem Fahrbahnbelag. Hierdurch kann auf einfache Weise, besonders an kritischen Stellen, Information über die Fahrbahnbeschaffenheit ermittelt und zur Verfügung gestellt werden. Dadurch kann die Sicherheit für ein sich auf der Fahrbahn bewegendes Fahrzeug erhöht werden.

Ein anderes vorteilhaftes Einsatzgebiet ist die Messung der Dicke von Eisschichten auf Windkrafträdern. Insbesondere im Zusammenhang mit einer Abtaueinrichtung, ist es möglich die Windkrafträder eisfrei zu halten und damit deren Einsatz auch bei niedrigen Temperaturen und hoher Luftfeuchtigkeit zu gewährleisten.

Ein weiteres vorteilhaftes Einsatzgebiet ist die Messung der Dicke von Eisschichten auf Tragflächen von Fluggeräten. Durch diese Information können wichtige Erkenntnisse über den Zustand der Tragflächen gewonnen werden und entsprechende Maßnahmen ergriffen werden. Insgesamt lässt sich so die Flugsicherheit erhöhen.

Die zuvor beschriebenen bevorzugten Einsatzgebiete sind in keiner Weise als beschränkend zu verstehen, sondern stellen lediglich Einsatzbereiche dar, in denen die Vorrichtung besonders vorteilhaft eingesetzt werden kann. Selbstverständlich kann die Vorrichtung auch in anderen Gebieten der Technik eingesetzt werden, in denen die Dicke eines Belags auf einer Oberfläche gemessen werden soll.

Weitere vorteilhafte Merkmale der Erfindung ergeben sich aus der Beschreibung bevorzugter Ausführungsformen der Erfindung unter Bezugnahme auf die Zeichnung. Es zeigen:
- Figur 1: eine schematische Darstellung einer ersten Ausführungsform der vorliegenden Erfindung,
- Figur 2: eine schematische Darstellung einer zweiten Ausführungsform der vorliegenden Erfindung, und
- Figur 3: eine schematische Darstellung einer dritten Ausführungsform der vorliegenden Erfindung.

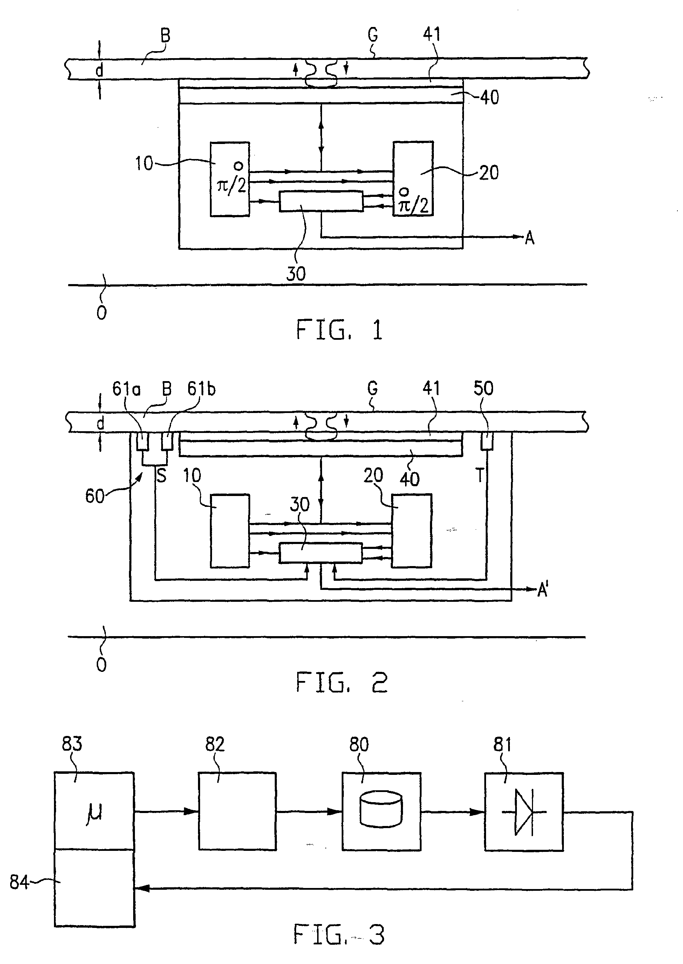

In Figur 1 ist eine Vorrichtung zur Messung der Dicke d eines Belags B auf einer O-berfläche O gemäß einer ersten Ausführungsform der vorliegenden Erfindung dargestellt.

Die Vorrichtung umfasst eine Einrichtung 10 zum Senden eines Radarsignals, die mit einer Antenneneinrichtung 40 verbunden ist. Dieses Radarsignal läuft durch den Belag B und wird an der Grenzfläche G des Belags reflektiert. Das reflektierte Signal wird wiederum von der Antenneneinrichtung 40, die mit einer Einrichtung zum Empfangen der Radarsignale 20 verbunden ist, aufgenommen und zu dieser Einrichtung zum Empfangen der Radarsignale 20 geführt.

In der in Figur 1 gezeigten Ausführungsform ist vor der Antenneneinrichtung 40 eine Schutzeinrichtung 41, durch welche die Radarstrahlung nur gering beeinflusst wird, vorgesehen. Diese Schutzeinrichtung vermeidet eine Beschädigung der Antenneneinrichtung 40 und kann vorzugsweise aus Kunststoff oder Keramik gebildet sein.

Weiterhin umfasst die in Figur 1 gezeigte Vorrichtung eine Einrichtung 30 zum Ermitteln der Dicke des Belags. Diese Einrichtung 30 nimmt von der Einrichtung zum Senden von Radarsignalen 10 zwei Signale, eines ohne Phasenverschiebung und eines, dessen Phase in der vorliegenden Ausführungsform um π/2 verschoben ist, ab und mischt diese beiden Signale mit dem von der Einrichtung zum Empfangen der Radarsignale 20 aufgenommenen Signal, das der Grenzfläche G des Belags B reflektiert worden ist. Diese beiden gemischten Signale werden an die Einrichtung zum Ermitteln der Dicke abgegeben. Aus diesen beiden Signalen wird durch einen Vergleich der Phasen des gesendeten und des empfangenen Radarsignals die Dicke d ermittelt. Die Einrichtung 30 zum Ermitteln der Dicke erzeugt hierbei ein Ausgabesignal A, das die Dicke d des Belags B repräsentiert. Dieses Signal A kann zur Ausgabe der Dicke d verwendet werden oder geeignet weiterverarbeitet werden, um beispielsweise einen Prozess in Abhängigkeit von der ermittelten Dicke d zu steuern.

Die in Figur 1 gezeigte Vorrichtung ist bündig in die Oberfläche O eingelassen, so dass zum einen ein Schutz der Vorrichtung gegen Beschädigung gegeben ist und zum anderen eine Messung ohne Beeinflussung der Oberflächenform gewährleistet ist.

Die Einrichtung zum Senden der Radarsignale 10 und die Einrichtung zum Empfangen der von der Grenzfläche reflektierten Radarsignale 20 sind in der vorliegenden Ausführungsform so ausgelegt, dass sie mit einer Frequenz von 2,45 GHz arbeiten.

Die in Figur 1 gezeigte Vorrichtung ist lediglich beispielhaft zu verstehen, insbesondere sind eine Vielzahl von Abwandlungen möglich.

So können beispielsweise sowohl für die Einrichtung zum Senden als auch für die Einrichtung zum Empfangen jeweils eine Antenneneinrichtung vorgesehen werden.

Darüber hinaus muss durch die Einrichtung zum Ermitteln der Dicke des Belags lediglich gewährleistet sein, dass ein Phasenvergleich der von der Einrichtung zum Senden 10 gesendeten Radarsignale und der von der Einrichtung zum Empfangen empfangenen Radarsignale gewährleistet ist. Hierzu sind eine Vielzahl aus dem Stand der Technik bekannter Verarbeitungsverfahren möglich.

Die Form der Vorrichtung aus Figur 1 zeigt lediglich eine schematische Darstellung. Insbesondere kann die Form den verschiedenen Erfordernissen, beispielsweise der Dicke der Oberfläche, der Form der Oberfläche und dergleichen angepasst werden.

Es ist darüber hinaus nicht erforderlich, die Vorrichtung bündig in der Oberfläche vorzusehen, solange sichergestellt ist, dass der Abstand zwischen der Antenneneinrichtung (mit Schutzeinrichtung) zur Oberfläche bekannt ist.

In Figur 2 ist eine zweite Ausführungsform einer Vorrichtung zur Messung der Dicke eines Belags auf einer Oberfläche gemäß der vorliegenden Erfindung dargestellt. Diese Vorrichtung unterscheidet sich von der in Figur 1 gezeigten Vorrichtung dadurch, dass eine Einrichtung 50 zur Erfassung der Temperatur T des Belags und eine Einrichtung 60 zur Erfassung des Salzgehalts S des Belags vorgesehen ist.

Die Einrichtung zur Erfassung der Temperatur ist in Form eines Temperatursensors, der in Kontakt mit dem Belag B tritt, ausgebildet. Dieser Temperatursensor gibt ein der Temperatur T entsprechendes Signal an die Einrichtung 30 zur Ermittlung der Dicke des Belags ab.

Die Einrichtung 60 zur Erfassung des Salzgehalts ist in Form von zwei an der Oberfläche angeordneten und mit dem Belag in Kontakt tretenden und voneinander isolierten Elektroden 61 a und 61 b ausgebildet. Durch Messung des Widerstands zwischen den beiden Elektroden kann schließlich der Salzgehalt S des Belags bestimmt werden. Die Einrichtung 60 gibt ein dem Salzgehalt S des Belags B entsprechendes Signal an die Einrichtung 30 zum Ermitteln der Dicke des Belags ab.

Die Einrichtung 30 zum Ermitteln der Dicke des Belags ist in der in Figur 2 dargestellten Ausführungsform weiterhin dazu vorgesehen, aus der Temperatur T und dem Salzgehalt S den Aggregatszustand des Belags zu ermitteln.

Die Einrichtung 30 gibt demgemäß ein Signal A' ab, das zum einen die Information über die Dicke d des Belags B und zum anderen die Information über den Aggregatszustand des Belags B umfasst.

Die übrigen Komponenten der in Figur 2 gezeigten Ausführungsform entsprechen den bereits im Zusammenhang in Figur 1 beschriebenen Komponenten. Zur Vermeidung von Wiederholungen wird deshalb lediglich auf die Beschreibung der Komponenten im Zusammenhang mit Figur 1 verwiesen. Hierzu bleibt anzumerken, dass die einander entsprechenden Komponenten gleiche Bezugszeichen tragen.

Auch die in Figur 2 dargestellte Ausführungsform stellt lediglich eine bevorzugte Ausgestaltung der erfindungsgemäßen Vorrichtung dar und kann auf vielfältige Weise abgewandelt oder verändert werden.

So können beispielsweise die Einrichtung zur Erfassung des Salzgehalts sowie die Einrichtung zur Erfassung der Temperatur, je nach Bedarf, einzeln eingesetzt werden.

Die Einrichtung zum Ermitteln der Dicke kann auch Signale abgeben, Informationen enthalten, die über die Information im Signal A' hinausgehen. Beispielsweise können auch die Merkmale der Temperatur T und der Salzgehalt S direkt ausgegeben werden.

Weiterhin sind auch beliebige andere Verfahren zur Ermittlung der Temperatur und des Salzgehalts, wie sie im Stand der Technik bekannt sind, möglich.

Im übrigen lassen sich auch die im Zusammenhang mit Figur 1 beschriebenen Abwandlungen bei der in Figur 2 gezeigten Ausführungsform analog einsetzen.

In Figur 3 ist eine dritte Ausführungsform der vorliegenden Erfindung dargestellt. Diese Vorrichtung weist mit den zuvor beschriebenen Ausführungsformen dahingehend eine Gemeinsamkeit auf, dass im Gegensatz zum Stand der Technik die Messung der Belagsdicke von Oberflächenseite her durchgeführt wird. Ansonsten arbeitet die Vorrichtung nach einem anderen Prinzip, nämlich mit einem offenen dielektrischen Resonator, der vorzugsweise im Mikrowellenbereich anregbar ist.

Die in Figur 3 dargestellte Vorrichtung umfasst hierzu einen offenen dielektrischen Resonator 80, der durch eine zylinderförmige Keramikscheibe gebildet ist. Dieser Resonator 80 ist, abgesehen von der offenen, dem zu messenden Belag zugewandten Seite metallisiert und weist an seiner Unterseite Aussparungen der Metalliserung zum Einkoppeln eines elektrischen Feldes, das mit variabler Frequenz von einer Auswerteeinrichtung 82, die durch einen digitalen Synthesizer gebildet ist, auf.

Darüberhinaus umfasst die Vorrichtung eine Detektionseinrichtung 81 zum Ermitteln der Amplitude des Resonators in Abhängigkeit von der eingespeisten Frequenz. Vorliegend ist diese Detektionseinrichtung 81 durch einen Diodendetektor ausgebildet.

Zur Steuerung des digitalen Synthesizers 82 und zur Messung des Ausgangssignals des Resonators 80 ist eine µ-Prozessoreinrichtung 83 vorgesehen. Das analoge Signal des Diodendetektors 81 wird in diesem Fall durch einen A/D-Wandler 84 in digitale Signale umgewandelt, so dass es von der µ-Prozessoreinrichtung 83 verarbeitet werden kann.

In der in Figur 3 gezeigten Vorrichtung tritt an der offenen Seite des dielektrischen Resonators 80 ein Streufeld aus, das durch die elektrischen Eigenschaften des Mediums des Belags, also beispielsweise durch die Dicke und das Belagsmaterial, beeinflusst wird.

Auf diese Weise wird durch den dielektrischen Resonator und das angrenzende Medium ein Resonanzkreis gebildet, dessen Frequenz von der Permittivität des angrenzenden Mediums abhängt. Darüberhinaus wird die Güte des Resonanzkreises in Abhängigkeit von der Beschaffenheit des Mediums verändert, was zu einer Änderung der Amplitude führt. Auf diese Weise kann durch Messung der Frequenz in dem Synthesizer 82 und durch Messung der Amplitude durch den Diodendetektor 81 mittels des µ-Prozessor die Dicke des Belags ermittelt werden.

In der gezeigten Vorrichtung ist die räumliche Ausdehnung des erzeugten Streufeldes so gering, dass eine Beeinflussung durch Störeffekte, die durch Gegenstände in der Nähe des Belags hervorgerufen werden können, vernachlässigbar ist.

## Patentansprüche

1. Vorrichtung zur Messung der Dicke (d) eines Belags (B) aus Wasser oder Eis auf einer Oberfläche (O), wobei die Vorrichtung bündig mit der Oberfläche vorgesehen ist, mit
einer Einrichtung zum Senden von Radarsignalen (10) durch den zu messenden Belag (B),
einer Einrichtung zum Empfangen der Radarsignale (20), die von der der Oberfläche abgewandten Grenzfläche (G) des Belags (B) reflektiert werden, und
einer Einrichtung zum Ermitteln der Dicke des Belags (30) aus einem Phasenvergleich der von der Einrichtung zum Senden (10) gesendeten Radarsignale und der von der Einrichtung zum Empfangen (20) empfangenen Radarsignale;
wobei die Einrichtung zum Senden von Radarsignalen (10) mit einer Antenneneinrichtung (40) verbunden ist, wobei vor der Antenneneinrichtung (40) eine Schutzeinrichtung (41) aus Kunststoff oder Keramik vorgesehen ist,
wobei die Schutzeinrichtung bündig mit der Oberfläche vorgesehen ist,
weiterhin umfassend eine Einrichtung zur Erfassung der Temperatur (T) des Belags.

2. Vorrichtung nach Anspruch 1, in welcher die Einrichtung zum Ermitteln der Dicke die von der Einrichtung zum Senden gesendeten Radarsignale und die von der Einrichtung zum Empfangen empfangenen Radarsignale mischt.

3. Vorrichtung nach Anspruch 2, in welcher die gesendeten Radarsignale vor dem Mischen mit einer Phasenverschiebung von π/2 versehen werden.

4. Vorrichtung nach einem der Ansprüche 1 bis 3, in welcher die Einrichtung zum Senden von Radarsignalen (10) und die Einrichtung zum Empfangen der reflektierten Radarsignale (20) für einen Frequenzbereich von 1 bis 100 GHz ausgelegt sind.

5. Vorrichtung nach Anspruch 4, in welcher die Einrichtung zum Senden der Radarsignale und die Einrichtung zum Empfangen der reflektierten Radarsignale für das ISM-Band, vorzugsweise für eine Frequenz von 2,45 GHz, ausgelegt sind.

6. Vorrichtung nach einem der Ansprüche 1 bis 5, in welcher die Einrichtung zum Senden und die Einrichtung zum Empfangen für Dauerstrichbetrieb ausgelegt sind.

7. Vorrichtung nach einem der Ansprüche 1 bis 6, in welcher die Einrichtung zum Senden der Radarsignale und die Einrichtung zum Empfangen der reflektierten Radarsignale eine gemeinsame Antenneneinrichtung (40) aufweisen.

8. Vorrichtung zur Messung der Dicke (d) eines Belags (B) auf einer Oberfläche (O), nämlich eines Belags aus Wasser oder Eis, mit
eine in Richtung des zu messenden Belags offenen dielektrischen Resonator (80), der durch eine zylinderförmige Keramikscheibe gebildet ist, die mit Ausnahme der dem Belag zugewandten Seite metallisiert ist, wobei die dem Belag abgewandte Seite Aussparungen in der Metallisierung aufweist,
einer an den dielektrischen Resonator (80) gekoppelten Auswerteeinrichtung (82) zur Speisung des dielektrischen Resonators mit einer variablen Frequenz,
einer Detektionseinrichtung (81) zum Ermitteln der Amplitude des dielektrischen Resonators (80) in Abhängigkeit von der eingespeisten Frequenz, und
einer Einrichtung (83,84) zum Ermitteln der Dicke des Belags aus der ermittelten Amplitude des dielektrischen Resonators und der eingespeisten Frequenz,
weiterhin umfassend eine Einrichtung zur Erfassung der Temperatur (T) des Belags.

9. Vorrichtung nach Anspruch 8, in welcher der Resonator für das ISM-Band, vorzugsweise für eine Frequenz von 5,8 GHz, ausgelegt ist.

10. Vorrichtung nach einem der Ansprüche 8 bis 9, in welcher die Detektionseinrichtung einen Diodendetektor aufweist.

11. Vorrichtung nach einem der Ansprüche 8 bis 10, in welcher die Auswerteeinrichtung einen digitalen Synthesizer aufweist.

12. Vorrichtung nach einem der Ansprüche 8 bis 11, in welcher die Auswerteeinrichtung und die Detektionseinrichtung von µ-prozessorgesteuert sind.

13. Vorrichtung nach einem der Ansprüche 1-12, in welcher die Einrichtung zur Erfassung der Temperatur des Belags in Form eines an der Oberfläche angeordneten Temperatursensors (50) ausgebildet ist.

14. Vorrichtung nach einem der Ansprüche 1 bis 13, in welcher eine Einrichtung zur Erfassung des Salzgehalts (S) des Belags vorgesehen ist.

15. Vorrichtung nach Anspruch 14, in welcher die Einrichtung zur Erfassung des Salzgehalts (60) in Form von zwei an der Oberfläche angeordneten und mit dem Belag in Kontakt tretenden Elektroden (61 a, 61 b) und einer Einrichtung zum Messen des Widerstands zwischen den beiden Elektroden vorgesehen ist.

16. Vorrichtung nach einem der vorangegangenen Ansprüche, die so ausgelegt ist, dass die ermittelte Dicke des Belags und/oder die erfasste Temperatur und/oder der erfasste Salzgehalt an eine Verkehrbeeinflussungsvorrichtung übermittelbar sind.

17. Steuereinrichtung für eine Abtauvorrichtung mit einer Vorrichtung nach einem der Ansprüche 1 bis 16, und einer Einrichtung, die ein Signal an die Abtaueinrichtung zur Inbetriebnahme derselben abgibt, wenn durch die Einrichtung zur Erfassung der Temperatur und/oder durch die Einrichtung zur Erfassung des Salzgehalts ermittelt worden ist, dass es sich bei dem Belag um Eis handelt.

18. Verwendung einer Vorrichtung nach einem der Ansprüche 1 bis 16, zur Bestimmung der Niederschlagshöhe von Wasser, Eis und/oder Schnee auf einem Fahrbahnbelag.

19. Verwendung einer Vorrichtung nach einem der Ansprüche 1 bis 16 zur Messung der Dicke von Eisschichten auf Windkrafträder.

20. Verwendung einer Vorrichtung nach einem der Ansprüche 1 bis 16 zur Messung der Dicke von Eisschichten auf Tragflächen von Fluggeräten.

## Claims

1. Device for measuring the thickness (d) of a layer (B) of water or ice on a surface (O), wherein the device is provided in a flush manner with the surface, comprising:
means for transmitting radar signals (10) through the layer (B) to be measured,
means for receiving the radar signals (20) reflected by the interface (G) of the layer (B), the interface (G) facing away from the surface, and
means for detecting the thickness of the layer (30) based on a phase comparison between the radar signals transmitted by the means for transmitting (10) and the radar signals received by the means for receiving (20);
wherein the means for transmitting radar signals (10) is connected to antenna means (40), wherein plastic or ceramic protective means (41) are provided in front of the antenna means (40),
wherein the protective means is provided in a flush manner with the surface, further comprising means for detecting the temperature (T) of the layer.

2. The device according to Claim 1, in which the means for detecting the thickness mixes the radar signals transmitted by the means for transmitting and the radar signals received by the means for receiving.

3. The device according to Claim 2, in which the transmitted radar signals are provided with a π/2 phase shift prior to mixing.

4. The device according to one of Claims 1 to 3, in which the means for transmitting radar signals (10) and the means for receiving the reflected radar signals (20) are configured for a frequency range of 1 to 100 GHz.

5. The device according to Claim 4, in which the means for transmitting the radar signals and the means for receiving the reflected radar signals are configured for the ISM band, preferably for a frequency of 2.45 GHz.

6. The device according to one of Claims 1 to 5, in which the means for transmitting and the means for receiving are configured for a continuous wave operation.

7. The device according to one of Claims 1 to 6, in which the means for transmitting the radar signals and the means for receiving the reflected radar signals have common antenna means (40).

8. Device for measuring the thickness (d) of a layer (B) on a surface (O), the layer being of water or ice, comprising:
a dielectric resonator (80) which is open in the direction of the layer to be measured and which is formed by a cylindrical ceramic disc which is metallized except for the side facing the layer, while the side facing away from the layer has recesses in the metallization,
evaluation means (82) coupled to the dielectric resonator (80) for supplying the dielectric resonator with a variable frequency,
detection means (81) for detecting the amplitude of the dielectric resonator (80) based on the supplied frequency, and
means (83, 84) for detecting the thickness of the layer based on the detected amplitude of the dielectric resonator and the supplied frequency,
further comprising means for detecting the temperature (T) of the layer.

9. The device according to Claim 8, in which the resonator is configured for the ISM band, preferably for a frequency of 5.8 GHz.

10. The device according to one of Claims 8 to 9, in which the detection means comprises a diode detector.

11. The device according to one of Claims 8 to 10, in which the evaluation means comprises a digital synthesizer.

12. The device according to one of Claims 8 to 11, in which the evaluation means and the detection means are controlled by a µ-processor.

13. The device according to one of Claims 1 to 12, in which the means for detecting the temperature of the layer is formed by a temperature sensor (50) arranged on the surface.

14. The device according to one of Claims 1 to 13, in which means for detecting the salt content (S) of the layer are provided.

15. The device according to Claim 14, in which the means for detecting the salt content (60) is provided by two electrodes (61 a, 61 b) and means for measuring the resistance between the two electrodes, the electrodes being arranged on the surface and contacting the layer.

16. The device according to one of the preceding Claims, which is configured in a way that the detected thickness of the layer and/or the detected temperature and/or the detected salt content are transmittable to a traffic control device.

17. Control means for a defrost device comprising a device according to one of Claims 1 to 16 and means for emitting a signal to the defrost device for initiating its operation, if the means for detecting the temperure and/or the means for detecting the salt content have detected that the layer is ice.

18. Use of a device according to one of Claims 1 to 16, for detecting the depth of precipitation of water, ice and/or snow on a road surface.

19. Use of a device according to one of Claims 1 to 16, for measuring the thickness of ice layers on windturbines.

20. Use of a device according to one of Claims 1 to 16, for measuring the thickness of ice layers on the airfoils of an aircraft.

## Revendications

1. Dispositif de mesure de l'épaisseur (d) d'une couche de recouvrement (B) d'eau ou de glace sur une surface (0), dans lequel le dispositif est agencé de manière affleurante sur la surface, avec
un dispositif d'émission de signaux radar (10) à travers la couche de recouvrement à mesurer (B),
un dispositif de réception des signaux radar (20) qui sont réfléchis sur l'interface (G) de la couche de recouvrement (B) opposée à ladite surface, et
un dispositif de détermination de l'épaisseur de la couche de recouvrement (30) à partir d'une comparaison de phases des signaux radar envoyés par le dispositif d'émission (10) et des signaux radar reçus par le dispositif de réception (20) ;
dans lequel le dispositif d'émission de signaux radar (10) est relié à un dispositif d'antenne (40),
dans lequel un dispositif de protection (41) en plastique ou en céramique est pourvu devant le dispositif d'antenne (40), dans lequel le dispositif de protection est agencé de manière affleurante sur la surface, et comprenant en outre un dispositif de détection de la température (T) de la couche de recouvrement.

2. Dispositif selon la revendication 1, dans lequel le dispositif de détermination de l'épaisseur mélange les signaux radar envoyés par le dispositif d'émission et les signaux radar reçus par le dispositif de réception.

3. Dispositif selon la revendication 2, dans lequel les signaux radar envoyés sont déphasés de π/2 avant le mélange.

4. Dispositif selon l'une des revendications 1 à 3, dans lequel le dispositif d'émission de signaux radar (10) et le dispositif de réception des signaux radar réfléchis (20) sont configurés pour une plage de fréquence de 1 à 100 GHz.

5. Dispositif selon la revendication 4, dans lequel le dispositif d'émission des signaux radar et le dispositif de réception des signaux radar réfléchis sont configurés pour la bande de fréquence ISM, et préférablement pour une fréquence de 2,45 GHz.

6. Dispositif selon l'une des revendications 1 à 5, dans lequel le dispositif d'émission et le dispositif de réception sont configurés pour un fonctionnement à onde entretenue.

7. Dispositif selon l'une des revendications 1 à 6, dans lequel le dispositif d'émission des signaux radar et le dispositif de réception des signaux radar réfléchis comportent un dispositif d'antenne commun (40) .

8. Dispositif de mesure de l'épaisseur (d) d'une couche de recouvrement (B) sur une surface (O), notamment une couche de recouvrement d'eau ou de glace, avec
un résonateur diélectrique ouvert en direction de la couche de recouvrement à mesurer (80) et constitué d'une plaque en céramique de forme cylindrique qui est métallisée, à l'exception du côté faisant face à la couche de recouvrement, dans lequel le côté opposé à la couche de recouvrement comporte des interruptions dans le traitement métallisé,
un dispositif d'évaluation (82) accouplé au résonateur diélectrique (80) pour fournir une fréquence variable au résonateur diélectrique,
un dispositif de détection (81) pour déterminer l'amplitude du résonateur diélectrique (80) en fonction de la fréquence fournie, et
un dispositif (83, 84) pour déterminer l'épaisseur de la couche de recouvrement à partir de l'amplitude du résonateur diélectrique déterminée et de la fréquence fournie,
et comprenant en outre un dispositif de détection de la température (T) de la couche de recouvrement.

9. Dispositif selon la revendication 8, dans lequel le résonateur est configuré pour la bande de fréquence ISM, et préférablement pour une fréquence de 5,8 GHz.

10. Dispositif selon l'une des revendications 8 à 9, dans lequel le dispositif de détection comporte un détecteur à diode.

11. Dispositif selon l'une des revendications 8 à 10, dans lequel le dispositif d'évaluation comporte un synthétiseur numérique.

12. Dispositif selon l'une des revendications 8 à 11, dans lequel le dispositif d'évaluation et le dispositif de détection sont commandés par un microprocesseur.

13. Dispositif selon l'une des revendications 1 à 12, dans lequel le dispositif de détection de la température de la couche de recouvrement est constitué sous forme d'un capteur de température (50) agencé sur ladite surface.

14. Dispositif selon l'une des revendications 1 à 13, dans lequel est pourvu un dispositif de détection de la salinité (S) de la couche de recouvrement.

15. Dispositif selon la revendication 14, dans lequel le dispositif de détection de la salinité (60) est pourvu sous forme de deux électrodes (61a, 61b) agencées sur ladite surface et en contact avec la couche de recouvrement, et d'un dispositif de mesure de la résistance entre les deux électrodes.

16. Dispositif selon l'une des revendications précédentes, configuré de telle sorte que l'épaisseur de la couche de recouvrement déterminée et/ou la température détectée et/ou la salinité détectée peuvent être transférées à un dispositif qui influence le trafic.

17. Dispositif de commande pour un dispositif de dégivrage comportant un dispositif selon l'une des revendications 1 à 16, ainsi qu'un dispositif qui procure un signal au dispositif de dégivrage pour la mise en marche de celui-ci lorsque le dispositif de détection de la température et/ou le dispositif de détection de la salinité déterminent que ladite couche de recouvrement est une couche de glace.

18. Application d'un dispositif selon l'une des revendications 1 à 16 pour la détermination d'une hauteur de précipitations d'eau, de glace et/ou de neige sur un revêtement routier.

19. Application d'un dispositif selon l'une des revendications 1 à 16 pour la mesure de l'épaisseur de couches de glace sur des éoliennes.

20. Application d'un dispositif selon l'une des revendications 1 à 16 pour la mesure de l'épaisseur de couches de glace sur les surfaces portantes d'aéronefs.
